# EUROPEAN PATENT SPECIFICATION

(11) **EP 1 603 983 B1**
(45) Date of publication and mention of the grant of the patent: **09.05.2007**
(21) Application number: 04720122.3
(22) Date of filing: 12.03.2004
(51) Int. Cl.: C09J 4/00, C09J 7/00, C09J 133/14, C08F 220/26

(54) **REVERSIBLY CROSSLINKED RESIN COMPOSITIONS AND METHODS**
REVERSIBEL VERNETZTE KLEBEHARZZUSAMMENSETZUNGEN SOWIE VERFAHREN
COMPOSITIONS DE RESINE ADHESIVE A RETICULATION REVERSIBLE ET PROCEDES

(30) Priority: 13.03.2003 US 454396 P
(43) Date of publication of application: 14.12.2005
(73) Proprietor: Sartomer Technology Co., Inc., Wilmington, DE 19803 (US)
(72) Inventor: BAILEY, Michael, A., Aston, PA 19014 (US); COSTIN, Richard, C., West Chester, PA 19380 (US); CESKA, Gary, W., Exton, PA 19343 (US)
(74) Representative: Chaillot, Geneviève
(86) International application number: PCT/IB2004/050243
(87) International publication number: WO 2004/081132

(56) References cited:
- US-A- 3 689 427
- US-A- 5 252 662
- US-B1- 6 380 278
- US-B1- 6 399 672
- MATSUDA H ET AL: "PREPARATION AND COPOLYMERIZATION OF DIVALENT METAL SALTS OF EHTYLENE GLYCOL-METHACRYLATE-PHTHALATE" JOURNAL OF APPLIED POLYMER SCIENCE, NEW YORK, NY, US, vol. 17, 1973, pages 1941-1952, XP000949863

## Description

This invention relates to adhesive resins, including sealants, and putties, and especially to pressure sensitive adhesives, high solids solvent recoverable adhesives, hot melt adhesives, and anaerobic adhesives.

Matsuda et al, U.S. Pat. 3,689,427, disclosed paints, molding materials, and adhesives prepared by polymerizing a bivalent metal salt prepared by polymerizing a metal salt prepared by reacting a metal oxide with a carboxyl functional ethylene glycolmethacrylate phthalate, and then polymerizing the metal salt or copolymerizing the metal salt with a copolymerizable ethylenically unsaturated monomer. The resulting polymers are heat resistant, have high tenacity, shock resistance, and adhesive properties.

Fan et al, U.S. Pat. 6,380,278, disclosed reacting metal salt polyols which were prepared by reacting metal oxide with a half ester containing a hydroxyl group and a carboxylic acid group with polyisocyanates and hydroxy functional acrylates or methacrylates to form urethane (meth)acrylate metal salts which are useful in coatings and adhesives. Fan et al disclosed the urethanes to have good adhesion properties, thermal properties, high strength, and reversible ionic crosslinking.

Ceska et al, U.S. Pat. 6,399,672 disclosed radiation cured coatings, adhesives, inks, and photoresist compositions prepared from compositions comprising oil soluble metal salts prepared by reacting a metal compound with an acid functional compound which is a reaction product of a hydroxy compound and a carboxylic polyacid, anhydride, sulfur oxide, or phosphorus oxide. The radiation curable compositions comprise a photoinitiator.

Wang et al, U.S. Pat. 6,232,366, disclosed pressure sensitive adhesives which have thermo -reversible properties, prepared from water soluble salt, hydrophilic plasticizer, an acidic comonomer, and a (meth)acrylate ester monomer having C₄-C₂₀ alkyl chains.

Acrylic adhesive polymers have been widely used as base resins for pressure sensitive tapes, labels, and other decorative and functional pressure sensitive products. The major benefits of acrylic adhesive polymers are adhesion to a broad range of substrates and excellent durability on exposure to moisture, heat and ultra -violet light. They can be prepa red as organic solutions, aqueous emulsions, suspensions or 100% solids that exhibit *either* thermoplastic or thermosetting crosslinkable behavior. Solution and hot melt acrylic adhesives are typically low molecular weight due to solution and melt viscosity limitations that result in low shear strengths. Accepted practice to compensate for low Mw is to crosslink the polymer during the drying process. Typically, these thermoset acrylic resins contain an acrylic monomer with a reactive pendant group such as an amide, carboxyl, hydroxyl or epoxy that can be post-crosslinked with other resins at elevated temperatures. Carboxyl containing polymers can be crosslinked by the use multifunctional metals such as metal alkoxides or acetylacetonates.

A first object of the present invention is an adhesive resin composition selected from a hot melt adhesive or a pressure sensitive adhesive or a sealant, which exhibits reversible crosslinking behavior, prepared by copolymerizing an alpha-beta ethylenically unsaturated monomer with an oil soluble metal salt prepared by reacting (A) a metal compound with (B) an acid functional compound which is a reaction product of a reactive mixture comprising (1) an alpha-beta ethylenically unsaturated hydroxy compound and (2) a carboxylic polyacid or anhydride, sulfur oxide, or phosphorus oxide.

Preferably the resultant ethylenically unsaturated oil soluble metal salt is copolymerized in the presence of a free radical initiator with other ethylenically alpha -beta unsaturated compounds to form reversibly crosslinked resins. Pressure sensitive adhesives (PSAs) and sealants benefit from the reverse crosslinking phenomenon. So, the adhesive resin composition of the invention is a hot melt adhesive (HM Adhesive, or HMA) or a pressure sensitive adhesive (PSA), more preferably a solvent -based PSA or finally a sealant. PSA may also be a HM PSA.

The adhesive resin compositions are cured under conditions other than radiation. The resultant adhesive resins exhibit thermoset (crosslinked) behavior at low temperatures but thermoplastic behavior at elevated temperatures due to breaking of the ionic crosslinks that are formed. This phenomenon is very useful in allowing unused resin to be recycled.

Suitable metals include lithium, sodium, potassium, cesium, magnesium, calcium, strontium, barium, titanium, zirconium, vanadium, chromium, molybdenum, tungsten, manganese, iron, cobalt, nickel, palladium, copper, zinc, cadmium, mercury, boron, aluminum, gallium, indium, silicon, german ium, tin, lead, antimony and bismuth. The metal compound can be, for example, the oxide, halide, alkoxide, hydroxide, nitrate, sulfate, carboxylate, and carbonate. The most preferred metal compound is zinc oxide since it reacts very easily and is readily available.

Suitable anhydrides and dicarboxylic acids include phthalic acid, trimellitic anhydride (which contains one anhydride and one carboxyl group), pyromellitic anhydride, 5-norbornene-endo-2,3-dicarboxylic anhydride, naphthyl anhydride, naphthalene tetracarboxylic acid dianhydride, maleic anhydride, succinic anhydride, chlorendic anhydride, maleic acid, succinic acid, fumaric acid, oxalic acid, malonic acid, glutaric acid, adipic acid, dimer fatty acids, styrene/maleic anhydride polymers and methyl hexahydrophthalic anhydride.

The said alpha-beta ethylenically unsaturated hydroxy compound is preferably selected among alpha -beta ethylenically unsaturated hydroxy derivatives of polyols, more preferably of diols. More preferably, these ethylenically unsaturated derivatives of polyols are partial esters of these polyols, more preferably of diols, with an alpha -beta ethylenically unsaturated carboxylic acid such as (meth)acrylic acid . Suitable polyols for these ethylenically unsaturated hydroxy derivatives, include diols such as ethylene glycol, propylene glycol, 1,3-propanediol, 1,2, 1,3 or 1,4 butanediols, 2 -methyl-1,3-propane diol (MPDiol), neopentyl glycol (NPG), alkoxylated derivatives of such diols, polyether diols and polyester diols. A preferred diol is polyethylene glycol of the formula HO(C₂H₅O)ₙH wherein n is 2 to about 10.

Suitable higher functional polyols are trimethylol propane (TMP), PETA, di-TMP, di-PETA, glycerol, alkoxylated derivatives thereof.

An especially preferred oil soluble metal salt according to the invention is a zinc salt prepared by reacting methyl hexahydrophthalic anhydride with a polyethylene glycol acrylate of the formula HO(C₂H₅O)ₙ OCHC=CH₂ wherein average n is 6 to form a half ester, and reacting the half ester with zinc oxi de. The resultant oil soluble zinc monomer has the structural formula (I) as follows.

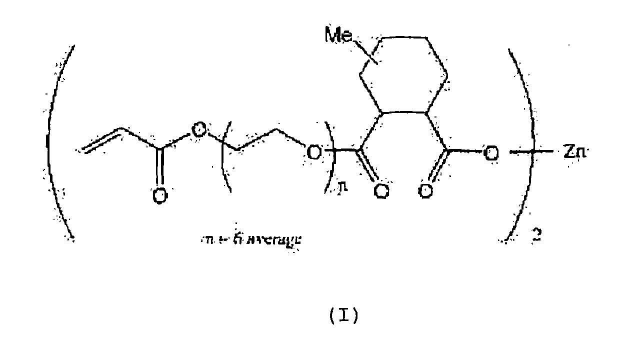

The oil soluble metal salt monomers are useful in the preparation of acrylic PSAs and hot melt pressure sensitive adhesive (HMPSA) resins by either bulk, solution or emulsion polymerization. The polymerization reaction can proceed at room temperature or higher by adding a free radical polymerization catalyst or merely elevating the temperature. The ratio of the metal salt to copolymerizable monomer can be 1:1 to 1:20 by weight.

The copolymerizable monomers are selected depending on the application. Preferably, they are selected from one or more (meth)acrylates and more preferably for PSA's is selected from a mixture of butyl acrylate and 2-ethyl hexyl acrylate. For PSAs, it is highly preferred to use 2 -ethylhexyl acrylate and acrylic acid as comonomers with the oil soluble metal salt. For sealants, butyl acrylate and methyl methacrylate copolymerizable monomers can be used.

The resultant acrylic copolymers of oil soluble metal salts exhibit higher glass transition temperatures (Tg's) and increased modulus or stiffness compared to conventional acrylic adhesive polymers, while maintaining sufficient tack to perform as a pressure sensitive material. More importantly, adhesive resins prepared with these unique ionic crosslinkers still exhibit thermoplastic behavior or flow when heated to allow for ease of application. This phenomenon is demonstrated by thermal analysis technique.and peel and shear adhesion testing.

A second subject covered by the present invention is a process for recovering a crosslinked resin obtainable according to the present invention as defined above , for recycling the said resin, comprising the steps of :
i) copolymerizing a composition as defined according to the present invention as defined above, to form an ionically crosslinked resin, and
ii) recovering the said resin by heating the ionically crosslinked resin to a temperature wherein the resin flows.

The temperature at step ii) is preferably at least the temperature at which the resin is extrudable.

### Modes for Carrying Out the Invention

The following examples illustrate a few embodiments of the invention. All parts and percentages are by weight unless otherwise indicated.

### Examples 1 to 6 - Solvent-based PSA's

Solvent-based PSA's formulations were prepared comparing acrylic polymers made by bulk polymerization with no crosslinker, a typical covalent crosslinker like SR -350 and an ionic crosslinking monomer organic soluble zinc salt. 0% and 2% crosslinker by weight was added to BA-MMA and 2-EHA/Acrylic Acid copolymers respectively and thermal analysis was performed. Samples with no crosslinker behave like a PSA exhibiting two Tg's. The samples were then dissolved at 25% by weight in Ethyl Acetate for making drawdowns for PSA testing. The covalent samples Examples 5 and 6 did not dissolve. The ionic samples did go into solution after 24 hours on a paint shaker. The results are reported in Table 1 below. Comparative examples are indicated by *.

**Table 1 - Results for Solvent-Based Acrylic PSA's with Reversible Crosslinking**

| Example | 1* | 2 | 3* | 4 | 5* | 6* |
|---|---|---|---|---|---|---|
| Butyl Acrylate¹ | 80 | 78 | | | 78 | |
| Methyl Methacrylate¹ 2-Ethylhexyl Acrylate¹ | 20 | 20 | | | 20 | |
| | | | 95 | 93 | | 93 |
| | | | | | | |
| Acrylic Acid¹ | | | 5 | 5 | | 5 |
| PRO-5474 Soluble | | 2 | | 2 | | |
| Zinc² Salt | | | | | | |
| SR-350 TMPTMA² | | | | | 2 | 2 |
| Vazo 67 Azonitrile³ | -- | -- | -- | -- | -- | -- |
| ASTM D Probe Tack | 3.01 | 3.53 | 4.71 | 3.81 | | |
| N (lbf) | (0.677) | (0.795) | (1.06) | (0.856) | --- | --- |
| ASTM D903 Peel Strength N/m(lbs/inch) | | | | | | |
| 24 hrs @ 25°C | 333 | 648 | 263 | 140 | NA | NA |
| | (1.9) | (3.7) | (1.5) | (0.8) | | |
| 30 mins @ 150°C | 145 | 350 | 578 | 771 | NA | NA |
| | (1.4) | (2.0) | (3.3) | (4.4) | | |
| DSC Analysis (-100 to 250°C) | | | | | | |
| Tg 1 | -49.6 | -17.4 | -67.1 | -35.4 | -32.9 | -18.4 |
| Tg 2 | | 5.2 | | -21.5 | 2.1 | 4.0 |

| | | | | | | |
|---|---|---|---|---|---|---|
| ¹ Aldrich ² Sartomer Co. ³ Dupont | | | | | | |

### Examples 7 to 10

A second set of solvent-based PSA formulations were prepared from polymers made by solution polymerization with and without crosslinker (3.0% by weight) as set forth in Table 2. In this experiment a conventional SR -2000 from Sartomer, long chain alkane diol diacrylate monomer was used as covalent crosslinker for comparison to the ionic crosslinkers NTX -5474 polyester from Sartomer, organic soluble metallic monomer and NTX-5910 from Sartomer, organic soluble metallic urethane oligomer used according to the invention. Thermal analysis was then performed on the resulting copolymers to determine glass transition temperature. Then drawdowns were prepared as in Examples 1-6. Probe tack, peel, and lap shear adhesion results are reported in Table 2. It was again observed that the polymer prepared with 3% covalent crosslinker (Examples 5 and 6) gelled, absorbing solvent but not redisolving and, therefore, no adhesive testing could be conducted.

**Table 2 - Zn Salt in Acrylic Solvent-Based PSA's**

| Composition | 7* | 8* | 9 | 10* |
|---|---|---|---|---|
| 2-Ethylhexyl Acrylate¹ | 85.5 | 82.8 | 82.8 | 82.8 |
| Acrylic Acid ¹ | 4.5 | 4.5 | 4.5 | 4.5 |
| NTX-5474 Zn Monomer² | | 2.7 | | |
| NTX-5910 Zn Oligomer ² | | | 2.7 | |
| SR-2000 C14 Diol Diacrylate² | | | | 2.7 |
| Ethyl Acetate ¹ | 210 | 210 | 210 | 210 |
| Vazo 67³ | 0.18 | 0.18 | 0.18 | 0.18 |
| Tg's by DSC | | | | |
| Tg 1 | -60.8 | -54.8 | -54.3 | NA |
| Tg 2 | NA | 27.7 | 25.0 | NA |
| Probe Tack, N (lbf) | 3.97 | 3.67 | 4.15 | |
| | (0.892) | (0.824) | (0.933) | NA |
| Peel Strength N/m (lbf/in) | | | | |
| 30 mins. @ 25°C; 30 mins @ 80°C | 1100 | 580 | 740 | NA |
| | (6.3) | (3.3) | (4.2) | |
| 30 mins @ 25°C; 30 mins @150°C | 1030 | 560 | 810 | NA |
| | (5.9) | (3.2) | (4.6) | |
| Shear Stress (mins) | | | | |
| Cured @80°C | 7.0 | 15.0 | 29.0 | NA |
| Cured @ 150°C | 11.0 | 15.0 | 64.0 | NA |
| Lap Shear Adhesion K Pa(psi) | 20.0 | 35.2 | 29.6 | |
| | (2.9) | (5.1) | (4.3) | NA |

| | | | | |
|---|---|---|---|---|
| ¹ Aldrich ² Sartomer Co. ³ Dupont | | | | |

### Examples 11 to 13 - Hot Melt Adhesives

Hot melt PSA's were prepared by addition of 80 phr of a hydrocarbon resin (Sunbelt TO-125 YS Resin) to the solvent based copolymers prepared in Examples 1 to 6. The resins were dissolved by heat and agitation on a hot plate. The solvent was then stripped off in a rotoevaporator. The resulting hot melts were then heated on a hot plate to 100°C and drawn down on 1» x 3» steel coupons for lap shear measurement. The lap shear results for the hot melts are reported in Table 3.

**Table 3 - Zn Salt in Acrylic Hot Melt PSAs**

| Experiment | 11* | 12 | 13* |
|---|---|---|---|
| 2-Ethylhexyl Acrylate | 95.0 | 92.0 | 92.0 |
| Acrylic Acid | 5.0 | 5.0 | 5.0 |
| NTX-5474 Zn Monomer | | 3.0 | |
| NTX-5910 Zn Oligomer | | | 3.0 |
| Vazo 67 | 0.16 | 0.16 | 0.16 |
| Sunbelt TO-125YS | 80.0 | 80.0 | 80.0 |
| Lap Shear Adhesion to CRS | | | |
| KPa(psi) | 30.3 | 51.7 | 66.2 |
| 30 mins @ 80°C | (4.4) | (7.5) | (9.6) |

### Examples 14 to 17 - Solvent -Based PSA from Solution Copolymers without Acrylic Acid

Solvent-based PSA's were prepared from solution copolymers of Butyl Acrylate and Methyl Methacrylate, with and without ionic crosslinkers. These examples demonstrate higher concentrations of crosslinker in the polymer without gelling. A higher polymerization temperature, higher boiling solvent, and a high temperature initiator were used. Copolymers were prepared with and without the metallic monomer ionic crosslinker at 5% by weight in formulations reported in Table 4. The high solids PSA's prepared from the copolymers formulated were tested for Probe Tack and Peel Strength. The results are reported in Table 4.

**Table 4 - BA-Methyl Methacrylate PSA copolymers with Soluble Metal Salts**

| Composition | 14* | 2 | 3 |
|---|---|---|---|
| Butyl Methacrylate | 72 | 67.5 | 67.5 |
| Methyl Methacrylate | 18 | 18 | 18 |
| Zn Monomer of Formula (I) | | 4.5 | |
| Zn Oligomer | | | 4.5 |
| n-Propyl Acetate | 210 | 210 | 210 |
| Luperox 575 Peroxide Initiator | 0.60 | 0.60 | 0.60 |
| Tg's by DSC | - | - | - |
| Probe Tack N (lbf) | 2.26 | 2.20 | 2.01 |
| | (0.508) | (0.494) | (0.452) |
| Peel Strength N/m (lbf/in) | | | |
| 30 mins. @ 25°C; 30 mins @ 80°C | 74.4 | 317.7 | 394.0 |
| | (0.425) | (1.814) | (2.250) |
| 30 mins @ 25°C; 30 mins @150°C | 127 | 340.4 | 340.4 |
| | (0.726) | (1.656) | (1.944) |
| Shear Stress (mins) | | | |
| Cured @ 80°C | 8.0 | 28.0 | 21.0 |
| Cured @ 150°C | 12.0 | 31.0 | 30.0 |

## Claims

1. - An adhesive resin composition selected from a hot melt adhesive or a pressure sensitive adhesive or a sealant, which exhibits reversible crosslinking behavior, prepared by copolymerizing an alpha-beta ethylenically unsaturated monomer with an oil soluble metal salt prepared by reacting (A) a metal compound with (B) an acid functional compound which is a reaction product of a reactive mixture comprising (1) an alpha-beta ethylenically unsaturated hydroxy compound and (2) a carboxylic polyacid or anhydride, sulfur oxide, or phosphorus oxide.

2. - The adhesive resin composition of claim 1, wherein it is prepared in the presence of a free radical initiator.

3. - The adhesive resin composition of claims 1 or 2, wherein the pressure sensitive adhesive is a solvent based adhesive.

4. - The adhesive resin composition of claims 1 to 3 wherein the alpha-beta ethylenically unsaturated monomer is one or more (meth)acrylates.

5. - The adhesive resin composition of claim 4 in the form of a pressure sensitive adhesive wherein the said unsaturated monomer is a mixture of butyl acrylate and 2-ethyl hexyl acrylate.

6. - The adhesive resin composition of claims 1 to 5, wherein it is cured in the absence of radiation conditions.

7. - The adhesive resin composition of claims 1 to 6, wherein the metal of the said metal compound is selected from the group consisting of lithium, sodium, potassium, cesium, magnesium, calcium, strontium, barium, titanium, zirconium, vanadium, chromium, molybdenum, tungsten, manganese, iron, cobalt, nickel, palladium, copper, zinc, cadmium, mercury, boron, aluminum, gallium, indium, silicon, germanium, tin, lead, antimony, and bismuth.

8. - The adhesive resin composition of claim 7, wherein the said metal compound is zinc oxide.

9. - The adhesive resin composition of claims 1 to 8, wherein the said carboxylic polyacid or anhydride, sulfur oxide, or phosphorus oxide is selected from the group consisting of or including phthalic acid, trimellitic anhydride, pyromellitic anhydride, 5-norbornene-endo-2,3-dicarboxylic anhydride, naphthyl anhydride, naphthalene tetracarboxylic acid dianhydride, maleic anhydride, succinic anhydride, chlorendic anhydride, maleic acid, succinic acid, fumaric acid, oxalic acid, malonic acid, glutaric acid, adipic acid, dimer fatty acids, styrene/maleic anhydride polymers and methyl hexahydrophthalic anhydride.

10. - The adhesive resin composition, according to any one of claims 1 to 9, wherein the said alpha-beta ethylenically unsaturated hydroxy compound is selected among ethylenically unsaturated hydroxy derivatives of polyols.

11. - The adhesive resin composition according to claim 10, wherein the said ethylenically unsaturated hydroxy derivative of polyol is a derivative of a diol, the said diol being selected from : ethylene glycol, propylene glycol, 1,3-propanediol, 1,2, 1,3 or 1,4 butanediols, 2-methyl-1,3-propane diol (MPDiol), neopentyl glycol (NPG), alkoxylated derivatives of such diols, polyether diols, and polyester diols.

12. - An adhesive resin composition according to any one of claims 1 to 11, wherein the said oil soluble metal salt is a zinc salt prepared by reacting methyl hexahydrophthalic anhydride with a polyethylene glycol acrylate of the formula HO(C₂H₅O)ₙ OCHC=CH₂ wherein average n is 6 to form a half ester, and reacting the half ester with zinc oxide.

13. - A process for recovering a crosslinked resin, as defined in any one of claims 1 to 12, for recycling the said resin , comprising the steps of :
i) copolymerizing a composition as defined according to any one of claims 1 to 12, to form an ionically crosslinked resin, and
ii)recovering the said resin by heating the ionically crosslinked resin to a temperature wherein the resin flows.

14. - The process of claim 13 wherein the temperature at step ii) is at least the temperature at which the resin is extrudable.

## Patentansprüche

1. Haftfähige Harzzusammensetzung, gewählt aus einem Heißschmelzklebstoff oder einem druckreaktiven Klebstoff oder einem Versiegelungsmittel, welche reversibles Vernetzungsverhalten zeigt, hergestellt durch Copolymerisieren eines alpha-beta-ethylenisch ungesättigten Monomers mit einem öllöslichen Metallsalz, hergestellt durch Umsetzen (A) einer Metallverbindung mit (B) einer säurefunktionellen Verbindung, welche ein Reaktionsprodukt einer reaktiven Mischung ist, umfassend (1) eine alpha-beta-ethylenisch ungesättigte Hydroxyverbindung und (2) ein(e) carboxylische(s) Polysäure oder Anhydrid, Schwefeloxid oder Phosphoroxid.

2. Haftfähige Harzzusammensetzung gemäß Anspruch 1, wobei sie in Gegenwart von einem Frei-Radikal-Initiator hergestellt wird.

3. Haftfähige Harzzusammensetzung gemäß den Ansprüchen 1 oder 2, wobei der druckreaktive Klebstoff ein auf Lösungsmittel basierender Klebstoff ist.

4. Haftfähige Harzzusammensetzung gemäß den Ansprüchen 1, bis 3, wobei das alpha-beta-ethylenisch ungesättigte Monomer ein oder mehrere (Meth)Acrylate ist.

5. Haftfähige Harzzusammensetzung gemäß Anspruch 4 in der Form eines druckreaktiven Klebstoffes, wobei das ungesättigte Monomer eine Mischung aus Butylacrylat und 2-Ethylhexylacrylat ist.

6. Haftfähige Harzzusammensetzung gemäß den Ansprüchen 1 bis 5, wobei sie in Abwesenheit von Strahlungsbedingungen gehärtet wird.

7. Haftfähige Harzzusammensetzung gemäß den Ansprüchen 1 bis 6, wobei das Metall der Metallverbindung gewählt wird aus der Gruppe, die aus Lithium, Natrium, Kalium, Cäsium, Magnesium, Calcium, Strontium, Barium, Titan, Zirkonium, Vanadium, Chrom, Molybdän, Wolfram, Mangan, Eisen, Kobalt, Nickel, Palladium, Kupfer, Zink, Cadmium, Quecksilber, Bor, Aluminium, Gallium, Indium, Silizium, Germanium, Zinn, Blei, Antimon und Wismut besteht.

8. Haftfähige Harzzusammensetzung gemäß Anspruch 7, wobei die Metallverbindung Zinkoxid ist.

9. Haftfähige Harzzusammensetzung gemäß den Ansprüchen 1 bis 8, wobei die (das) carboxylische Polysäure oder Anhydrid, Schwefeloxid oder Phosphoroxid aus der Gruppe gewählt wird, die aus Phthalsäure, Trimellithsäureanhydrid, Pyromellithsäureanhydrid, 5-Norbornen-endo-2,3-dicarbonsäureanhydrid, Naphthylanhydrid, Naphthalintetracarbonsäuredianhydrid, Maleinsäureanhydrid, Bernsteinsäureanhydrid, Chlorendianhydrid, Maleinsäure, Bernsteinsäure, Fumarsäure, Oxalsäure, Malonsäure, Glutarsäure, Adipinsäure, Dimerfettsäuren, Styrol/Maleinsäureanhydrid-Polymeren und Methylhexahydrophthalsäureanhydrid besteht oder diese einschließt.

10. Haftfähige Harzzusammensetzung gemäß einem der Ansprüche 1 bis 9, wobei die alpha-beta-ethylenisch ungesättigte Hydroxyverbindung aus ethylenisch ungesättigten Hydroxyderivaten von Polyolen gewählt wird.

11. Haftfähige Harzzusammensetzung gemäß Anspruch 10, wobei das ethylenisch ungesättigte Hydroxyderivat von Polyol ein Derivat eines Diols ist, wobei das Diol aus folgendem gewählt wird: Ethylenglykol, Propylenglykol, 1,3-Propandiol, 1,2-, 1,3- oder 1,4-Butandiolen, 2-Methyl-1,3-propandiol (MPDiol), Neopentylglykol (NPG), alkoxylierten Derivaten von solchen Diolen, Polyetherdiolen und Polyesterdiolen.

12. Haftfähige Harzzusammensetzung gemäß einem der Ansprüche 1 bis 11, wobei das öllösliche Metallsalz ein Zinksalz ist, das durch die Reaktion von Methylhexahydrophthalsäureanhydrid mit einem Polyethylenglykolacrylat der Formel HO (C₂H₅O)ₙ OCHC =CH₂, worin das durchschnittliche n 6 ist, um einen Halbester zu bilden, und die Umsetzung des Halbesters mit zinkoxid hergestellt wird.

13. Verfahren zum Gewinnen eines vernetzten Harzes, wie in den Ansprüchen 1 bis 12 definiert, zum Recyceln des Harzes, umfassend die folgenden Schritte:
i) Copolymerisieren einer Zusammensetzung, wie gemäß einem der Ansprüche 1 bis 12 definiert, um ein ionisch vernetztes Harz zu bilden, und
ii) Rückgewinnen des Harzes durch Erhitzen des ionisch vernetzten Harzes auf eine Temperatur, bei der das Harz fließt.

14. Verfahren gemäß Anspruch 13, wobei die Temperatur in Schritt ii) mindestens die Temperatur ist, bei der das Harz extrudierbar ist.

## Revendications

1. Formule de résine adhésive sélectionnée parmi un adhésif fusible, un adhésif à pression sensible ou un joint d'étanchéité et qui présente un comportement en réticulation réversible, élaborée par la copolymérisation d'un monomère portant une insaturation éthylénique en α,β avec un sel métallique oléosoluble préparé par la réaction de (A) un composé métallique avec (B) un composé portant une fonction acide qui est un produit de réaction d'un mélange réactionnel comprenant (1) un composé hydroxy portant une insaturation éthylénique en α,β et (2) un polyacide ou un anhydride carboxylique, un oxyde de soufre ou un oxyde de phosphore.

2. Formule de résine adhésive selon la revendication 1, élaborée en présence d'un initiateur radicalaire.

3. Formule de résine adhésive selon les revendications 1 ou 2, où l'adhésif à pression sensible est un adhésif à base de solvant.

4. Formule de résine adhésive selon les revendications 1 à 3, où le monomère portant une insaturation éthylénique en α,β correspond à un ou plusieurs acrylates ou méthacrylates.

5. Formule de résine adhésive selon la revendication 4 sous forme d'un adhésif à pression sensible où ledit monomère insaturé est un mélange d'acrylate de butyle et d'acrylate de 2-éthylhexyle.

6. Formule de résine adhésive selon les revendications 1 à 5, durcie en l'absence de rayonnements.

7. Formule de résine adhésive selon les revendications 1 à 6, où le métal dudit composé métallique est sélectionné au sein du groupe constitué par le lithium, le sodium, le potassium, le césium, le magnésium, le calcium, le strontium, le baryum, le titane, le zirconium, le vanadium, le chrome, le molybdène, le tungstène, le manganèse, le fer, le cobalt, le nickel, le palladium, le cuivre, le zinc, le cadmium, le mercure, le bore, l'aluminium, le gallium, l'indium, le silicium, le germanium, l'étain, le plomb, l'antimoine et le bismuth.

8. Formule de résine adhésive selon la revendication 7, où ledit composé métallique est l'oxyde de zinc.

9. Formule de résine adhésive selon les revendications 1 à 8, où ledit polyacide ou anhydride carboxylique, oxyde de soufre ou oxyde de phosphore est sélectionné au sein du groupe constitué par ou incluant l'acide phtalique, l'anhydride trimellitique, l'anhydride pyromellitique, l'anhydride 5-norbornène-endo-2,3-dicarboxylique, l'anhydride naphtalique, le dianhydride de l'acide naphtalènetétracarboxylique, l'anhydride maléique, l'anhydride succinique, l'anhydride chlorendique, l'acide maléique, l'acide succinique, l'acide fumarique, l'acide oxalique, l'acide malonique, l'acide glutarique, l'acide adipique, les acides gras dimérisés, les polymères d'anhydride maléique et de styrène et l'anhydride méthylhexahydrophtalique.

10. Formule de résine adhésive selon l'une quelconque des revendications 1 à 9, où ledit composé hydroxy portant une insaturation éthylénique en α,β est sélectionné parmi les dérivés de polyols portant une insaturation éthylénique.

11. Formule de résine adhésive selon la revendication 10, où ledit dérivé de polyol portant une insaturation éthylénique est un dérivé de diol, ledit diol étant sélectionné parmi : l'éthylène glycol, le propylène glycol, le 1,3-propanediol, les 1,2-, 1,3- et 1,4-butanediols, le 2-méthyl-1,3-propanediol (MPDiol), le néopentyle glycol (NPG), les dérivés alkoxylés de tels diols, les polyéther diols et les polyesters diols.

12. Formule de résine adhésive selon l'une quelconque des revendications 1 à 11, où ledit sel métallique oléosoluble est un sel de zinc préparé par la réaction de l'anhydride méthylhexahydrophtalique avec un acrylate de polyéthylène glycol de formule HO(C₂H₅O)ₙOCHC=CH₂, où n est égal à 6 en moyenne, pour former un semi-ester, et la réaction du semi-ester avec de l'oxyde de zinc.

13. Procédé de récupération d'une résine réticulée, telle que définie selon l'une quelconque des revendications 1 à 12, pour le recyclage de ladite résine, et comprenant les étapes de :
i) copolymérisation d'une formule selon la présente invention comme défini selon l'une quelconque des -revendications 1 à 12, pour former une résine réticulée par voie ionique, et
ii) récupération de ladite résine par chauffage de la résine réticulée par voie ionique à une température à laquelle la résine est fluide.

14. Procédé selon la revendication 13 où la température de l'étape ii) est préférentiellement au moins la température à laquelle la résine est extrudable.
